# EUROPEAN PATENT APPLICATION

(11) **EP 4 556 833 A1**
(43) Date of publication of application: **21.05.2025**
(21) Application number: 23020504.9
(22) Date of filing: 15.11.2023
(51) Int. Cl.: F27D 11/02, F27D 99/00, F28D 21/00

(54) **ELECTRICAL FURNACE, A METHOD FOR CONSTRUCTING AN ELECTRICAL FURNACE AND A METHOD FOR RETROFITTING A FURNACE**

(71) Applicant: Linde GmbH, 82049 Pullach (DE); BASF SE, 67056 Ludwigshafen am Rhein (DE); SABIC Global Technologies B.V., 4612 PX Bergen op Zoom (NL)
(72) Inventor: Heinle, Dominik, 82049 Pullach (DE); Fohlmeister, Christian, 82049 Pullach (DE); Can, Ismail, 82049 Pullach (DE); Mayerhofer, Matthias, 82049 Pullach (DE)
(74) Representative: Reuß, Stephanie

(57) **Abstract**

The present invention relates to a furnace for performing a chemical process and/or for heating a process medium, wherein the furnace comprises a number of walls (111) defining an interior volume of the furnace, wherein at least one load-bearing element (211, 212, 213) of at least one wall (111) of the furnace is provided as a load-bearing structure (210) of the furnace; wherein at least one recess (230) is provided in the at least one wall adjacent to the at least one load-bearing element (211, 212, 213) of the load-bearing structure (210); wherein at least one electrical heating unit (140) is provided in the at least one recess (230).

## Description

The present invention relates to a furnace for performing a chemical process and/or for heating a process medium as well as to a method for constructing a furnace and to a method for retrofitting a furnace.

### Background of the invention

In a number of processes in the chemical industry, reactors or furnaces are used in which one or more reactants are passed through heated reaction tubes where they are catalytically or non-catalytically reacted. The heating serves in particular to overcome the activation energy required for the chemical reaction taking place and, in the case of endothermic reactions, to provide the necessary energy for the chemical reaction. The reaction can proceed endothermically overall or, after overcoming the activation energy, exothermically.

Examples of such processes are steam cracking, various reforming processes, in particular steam reforming, dry reforming (carbon dioxide reforming), mixed reforming processes, processes for the dehydrogenation of alkanes and the like. In steam cracking, the reaction tubes are guided through the reactor or furnace in the form of coils, which have at least one reverse bend in the furnace, whereas in steam reforming, tubes are typically used which run through the furnace without a reverse bend. The present invention may also be used in connection with so-called "millisecond" or "single-pass" reactors which are characterized by very low dwell times.

Further applications of the present invention are furnaces for performing a reverse water gas shift (RWGS) reaction of carbon dioxide and hydrogen to form carbon monoxide and water, dehydrogenation of oxygenates such as a reaction of methanol to formaldehyde and hydrogen, cleavage of ammonia to yield gaseous nitrogen and hydrogen, dehydrogenation of so-called liquid organic hydrogen carriers (LOHC) as known to the skilled person, and reforming of methanol and glycerol (as far as not already included by the term "reforming" used above).

The present invention is suitable for all embodiments of furnaces used for such processes as well as for furnaces for heating a process medium. Purely by way of illustration, reference is made to the articles "Ethylene", "Gas Production" and "Propene" in Ullmann's Encyclopedia of Industrial Chemistry, for example the publications dated April 15, 2009, DOI: 10.1002/14356007.a10_045.pub2, December 15, 2006, DOI: 10.1002/14356007.a12_169.pub2, and June 15, 2000, DOI: 10.1002/14356007.a22_211.

The reaction tubes of corresponding furnaces are conventionally heated by using burners. The reaction tubes are, for this purpose, guided through a combustion chamber in which the burners are also arranged. However, it is also possible to support or replace the burners in corresponding furnaces by electrical heating means with no or reduced local carbon dioxide emissions. In addition to direct electrical heating, in which current is applied to the reaction tubes themselves, for example in a known star (point) circuit, and other types of heating, which are not explained in detail here, concepts also exist in particular for so-called indirect electrical heating. Such indirect electrical heating can e.g. be carried out using electrically operated radiative heating elements ("radiant heaters") suitable for heating to the high temperatures required for the reactions mentioned, such heating elements being arranged within the furnace in such a way that they are not in direct contact with the reaction tubes. The heat transfer takes place predominantly or exclusively in the form of radiant heat.

In these kinds of indirectly heated furnaces, the corresponding heating element can have a limited service life which can lead to high levels of maintenance, in particular in furnaces with high process temperatures, e.g. in cracking furnaces, reforming furnaces or DRI (direct reduction iron) furnaces. It is therefore desirable to improve furnaces with radiative heating elements for indirect heating.

### Disclosure of the invention

The present invention relates to a furnace as well as to a method for constructing a furnace and to a method for retrofitting a furnace with the features of the independent claims. Embodiments and advantages form the subject-matter of the dependent claims and of the subsequent description.

The furnace or process furnace is provided for performing a chemical process, i.e. a process for carrying out a chemical reaction, and/or for heating a process medium. For this purpose, tubes or reaction tubes (in the following generally "tubes") to be heated can be provided in an interior volume or chamber or process chamber of the furnace such that one or more reactants can be passed through the correspondingly heated tubes, where they are catalytically or non-catalytically reacted. It is also possible to pass a process medium to be heated through the correspondingly heated tubes. The furnace can particularly be provided for performing a steam cracking process, various reforming processes, in particular steam reforming, dry reforming (carbon dioxide reforming), mixed reforming processes, processes for the dehydrogenation of alkanes and the like. The furnace can particularly be a cracking furnace, a reforming furnace, a direct reduced iron (DRI) furnace etc.

The furnace comprises a number of walls, e.g. side walls, a front-end wall, a back-end wall, a top wall and a bottom wall. These walls define or enclose the interior volume of the furnace, in which tubes to be heated can be provided.

At least one load-bearing element of at least one wall of the furnace is provided as a statically load-bearing section or load-bearing structure of the furnace. This load-bearing structure is therefore expediently needed for maintaining a structural or static integrity of the entire furnace. The load-bearing structure can be provided as a one-piece element, i.e. as one single load-bearing element made of a specific material, or as several separate load-bearing elements at least a part of those being connected with each other, e.g. beams, bars, plates, etc.

This load-bearing structure shall hereafter also be referred to as a first section or a first part or a first segment of the corresponding wall. A second section or a second part or second segment of the corresponding at least one wall can expediently be provided as a non-loadbearing section of the furnace. This second section is expediently independent of or uncoupled from the load-bearing structure of the furnace. Expediently, this second section is not necessarily needed for maintaining the structural or static integrity of the entire furnace. The second section can e.g. also be provided as a one-piece element, single element made of a specific material, such as filling materials with or without cavities, or as several separate elements, e.g. beams, bars, plates, etc., connected with each other.

At least one recess or opening or cavity is provided in the at least one wall adjacent to the at least one load-bearing element of the load-bearing structure. A corresponding recess can be provided directly adjacent to the corresponding load-bearing element, i.e, such that the corresponding recess is arranged directly next to the load-bearing element. It is also possible that another element is arranged between the corresponding recess and the corresponding load-bearing element, e.g. a non-loadbearing plate or a non-loadbearing beam.

For example, the second section is or forms the at least one recess itself. For example, a corresponding recess of that kind can be provided by firstly constructing the entire wall and then removing material or elements from the created wall. Alternatively, when creating the corresponding wall, the material or elements of the corresponding wall can be provided around the corresponding recess such that the recess is left open. The recess or the sum of the various recesses can for example occupy the entire second section such that the second section itself corresponds to the recesses or openings in the furnace wall. It is also possible, that the recess or the sum of the various recesses do not occupy the entire second section.

At least one electrical heating unit is provided or inserted or mounted in the at least one recess. These electrical heating units are configured for electrically heating the interior volume of the furnace and can electrically be operated to radiate thermal energy for heating the furnace interior to a corresponding temperature, e.g. required for performing the corresponding chemical process. The electrical heating units are particularly provided as modular units, which can comprise an actual heating element or heating means as well as other elements, e.g. for insulation, for mounting etc. In particular, one electrical heating unit is provided in each recess. Form and dimensions of the electrical heating unit and the respective recess expediently correspond to each other or match each other.

In particular, the electrical heating units are provided as a part of the non-loadbearing section of the corresponding furnace wall. The electrical heating units are expediently independent of and uncoupled from the load-bearing structure of the furnace and are particularly not needed for maintaining the structural or static integrity of the furnace.

It is to be understood that only one of the furnace walls can be provided with corresponding recesses and electrical heating units or that several of the furnace walls can each individually be provided with corresponding recesses and electrical heating units. In particular, each furnace wall can comprise an individually distributed load-bearing section, wherein the position, number, form and dimensions of corresponding recesses can individually be determined.

The present invention allows to integrate electrical heating means for an effective indirect heating of the furnace interior into the walls of the furnace in a space saving, low-cost, low-effort manner. In particular, number, position, form and dimensions of each recess and the correspondingly inserted heating unit can be determined in order to allow an effective heating of the furnace interior in dependence of the static requirements for maintaining the structural integrity of the furnace. Expediently, the structural support structure of the furnace is statically decoupled from the heating means and further particularly from other elements necessary for providing and operating the heating means like wires, connection means etc. Electrical wirings and connection means between the individual heating units can for example be provided outside of the furnace. Particularly, these connection means can individually and easily be disconnected from each other. The individual heating units can easily be inserted into their respective recess and can further easily be removed from their respective recess within a short time, e.g. for maintenance, repair or replacement, without the risk of losing the structural integrity of the furnace. The present invention particularly allows great freedom for the design of the individual heating units, e.g. with regard to tolerances, e.g. consideration of slotted holes for individual connection means.

In conventional indirectly heated furnaces, corresponding heating means or heating elements are usually provided inside the furnace, i.e. in the interior volume of the furnace, oftentimes arranged close to the furnace walls or attached to the wall surfaces. Since a thermal heating surface load of these heating elements can be limited, heating elements might have to be installed over the entire surface of the corresponding furnace wall. Further, the size of the various heating elements can be limited for reasons of manageability and electrical control, which can result in a large number of heating elements and a correspondingly large number of connections between these elements and other elements such as main supports or carriers. This kind of furnace design might yield very high maintenance costs. Oftentimes the heating elements cannot easily be removed out of the furnace, such that maintenance of the heating elements might have to be performed in the interior of the furnace itself. For this purpose, it might be required to provide a scaffold in the furnace interior, which might be rather elaborate and expensive.

In contrast to that, the electric heating units of the furnace according to the present invention can easily be removed such that maintenance of the removed heating units and their heating means can be performed outside of the furnace e.g. in a workshop. Maintenance of the heating units therefore does not have to be performed inside the furnace itself. Expediently, it is not necessary to provide scaffolding inside the furnace for maintenance of the heating units. The present invention therefore allows maintenance, repair or replacement of individual heating units in a fast, low-cost and low-effort manner, which can be carried out under high safety conditions.

The present invention further relates to a method for constructing a furnace for performing a chemical process and/or for heating a process medium. The method can be performed e.g. during a planning or design phase, in which the furnace design and furnace structure is developed, as well as a subsequent construction phase, in which the furnace is eventually constructed.

Various walls are provided defining the interior of the furnace. At least one load-bearing element of at least one wall of the furnace is provided as a load-bearing structure or a first section of the furnace. A second section of the corresponding wall can be provided as a non-loadbearing section of the furnace. The corresponding wall can expediently be planned, designed and developed to have the correspondingly distributed first and second section e.g. by means of structural analysis. The first and second section can be constructed e.g. be assembling corresponding different elements like beams, bars, plates, etc.

At least one recess or opening is provided in the corresponding wall adjacent to the at least one load-bearing element, e.g. by constructing the entire wall and then removing material or elements from the wall or by providing the corresponding material or elements of the wall such that the recess is left open. At least one electrical heating unit is provided in the at least one recess. These electrical heating units are expediently provided as part of the non-loadbearing section of the respective wall. The various heating units can e.g. be connected with each other by means of electrical wirings and connections provided outside of the furnace.

The corresponding furnace can therefore explicitly be constructed to have various recesses and heating units from the beginning. Expediently, the corresponding load-bearing and non-loadbearing section can be distributed in the respective furnace wall, e.g. in the development or design phase, such that the structural integrity of the furnace can safely be guaranteed and such that the recesses and heating units can effectively be distributed throughout the furnace to allow an optimum heating of the furnace interior.

The present invention further relates to a method for retrofitting a furnace for performing a chemical process and/or for heating a process medium. The furnace therefore already exists and is expediently already operated, i.e. the number of furnace walls have already been constructed.

The corresponding at least one load-bearing element of at least one wall of the furnace is determined as a load-bearing structure. A second section of the corresponding wall can be determined as a non-loadbearing section. In particular, the various walls and their contribution to the structural integrity of the furnace can be evaluated, e.g. by means of structural analysis, in order to identify the corresponding load-bearing and non-loadbearing sections of the walls.

At least one recess is provided in the at least one wall adjacent to the at least one load-bearing element. Expediently, the at least one recess is provided in the second, non-loadbearing section of the at least one wall. At least one electrical heating unit is provided or inserted in the at least one recess. Expediently, material or elements of the already existing wall can be removed in order to create the corresponding recess(es). By means of a structural analysis of the support structure the load-bearing and non-loadbearing section of the furnace wall can be identified and the corresponding material or elements can safely be removed without losing the static integrity of the furnace.

An already existing furnace can therefore retrospectively be upgraded to have corresponding recesses and heating units, e.g. in order to reduce future maintenance costs. Expediently, the existing static circumstances of the furnace can be evaluated in order to identify the load-bearing and non-loadbearing parts of the furnace walls. Depending on these given circumstances, the recesses and heating units can especially be distributed in order to allow an optimum heating of the furnace interior.

Embodiments and advantages of the furnace according to the invention and of the methods according to the invention shall arise from the present description in an analogue manner.

According to an embodiment, the at least one electrical heating unit is provided as an interchangeable, exchangeable or replaceable unit or module. If necessary, e.g. during maintenance or in case of a defect, the corresponding electrical heating unit can easily be replaced by a respective spared part.

According to an embodiment, the at least one electrical heating unit is fastened by means of detachable fastening means, e.g. screws, bolts, brackets, etc. By means of these fastening means, the corresponding heating unit can easily be connected with and fastened to the remaining wall. If necessary, the fastening means can be released such that the corresponding heating unit can easily be removed.

According to an embodiment, each electrical heating unit comprises a heating element and/or an insulation element and/or a panel element. The heating element is particularly provided as the actual heating means for heating the interior of the furnace. For example, the heating element can be an electrical heating wire or a heating material, e.g. SiC or MoSi2. The insulation element can expediently be provided for insulating the interior of the furnace from the exterior environment. The panel element can expediently be provided as a cover or shrouding of the exterior surface of the corresponding furnace wall and can e.g. be provided as a steel plate. The electrical heating units can further comprise other elements, e.g. electrical wirings and connection means. For example, each heating unit can further comprise welded-on stiffening ribs, expediently for stiffening the respective heating unit against wind loads, etc.

According to an embodiment, each recess is provided at a specific position and/or with a specific form and/or with specific dimensions. Expediently, position, form and dimension of each recess can individually be determined, e.g. depending on the position, form and dimension of the load-bearing elements and further e.g. to allow an optimum heating of the furnace. It is for example also possible that several or all of the recesses can have the same form and/or the same dimensions. Further, also the form and/or dimensions of the electrical heating units can individually be determined. Expediently, form and dimension of a respective heating unit corresponds to the respective recess into which it is inserted.

According to an embodiment, a structural analysis or a static calculation or static evaluation is performed in order to determine a position and/or a form and/or dimensions of the at least one load-bearing element of the at least one wall. Further, a position and/or a form and/or dimensions of the second, non-loadbearing section of the at least one wall can be determined by means of the structural analysis. When constructing a new furnace, structural analysis can e.g. be performed in order to distribute the load-bearing and non-loadbearing sections such that structural integrity of the furnace can safely be maintained and such that a large enough area is available for providing the heating units in order to effectively heat the furnace. When retrofitting a furnace, structural analysis can e.g. be performed such that the recesses can safely be provided without losing the structural integrity of the furnace and such that the heating units can be distributed for effectively heating the furnace.

According to an embodiment, a structural analysis is performed in order to determine a specific number of the at least one recess and/or a specific position of each recess of the at least one recess and/or a specific form of each recess of the at least one recess and/or specific dimensions of each recess of the at least one recess. The structural analysis can expediently be performed such that the available non-loadbearing section can effectively be utilised in order to effectively heat the furnace. For example, when constructing a new furnace, structural analysis can expediently be performed in order to determine position, form and dimension of the first and second section and of the various recesses in dependence of each other. The design of the furnace can therefore particularly be optimised such that the heating units can be distributed in an optimum manner.

According to an embodiment, several load-bearing elements of the load-bearing structure are provided and are connected with each other. These various load-bearing elements can e.g. be connected by means of mechanical fastening or connection means like bolts, screws, etc., and/or by means of a material connection like welding, and/or can form an integral part. Expediently, the load-bearing elements can be beams, bars, etc.

According to an embodiment, the load-bearing elements comprise a first number of load-bearing elements arranged horizontally or at least essentially horizontally and a second number of load-bearing elements arranged vertically or at least essentially vertically. Expediently, the horizontally arranged load-bearing elements can be cross connections between the vertically arranged load-bearing elements.

According to an embodiment, the at least one load-bearing element of the load-bearing structure forms a frame structure. Expediently, each wall of the furnace comprises correspondingly connected horizontal and vertical load-bearing elements such that all these load-bearing elements form a three-dimensional frame structure enclosing the interior volume, inside which the tubes can be provided.

According to an embodiment, each recess is surrounded by several load-bearing elements of the load-bearing structure. Expediently, each recess can be arranged between corresponding load-bearing elements like beams, bars, etc. For example, each recess can be cuboid-shaped. Particularly, two vertically arranged load-bearing elements and two horizontally arranged load-bearing elements can be provided adjacent to corresponding respective sides of a corresponding cuboid-shaped recess.

In particular, the load-bearing elements of the load-bearing structure are provided as massive bars and beams arranged horizontally and vertically and connected with each other in order to form a load-bearing frame structure. The recesses can be provided as holes or cavities between the bars/beams of the frame structure. Each of these recesses can be surrounded by two horizontally arranged bars or beams and by two vertically arranged bars or beams of the load-bearing structure.

According to an embodiment, the at least one electrical heating unit is provided as a non-loadbearing structure of the at least one wall of the furnace. Therefore, the heating units provided inside the recesses, i.e. especially in cavities or holes between the bars/beams of the load-bearing structure, serve no load-bearing purpose and can thus e.g. be light-weight elements. The heating units are therefore independent of and uncoupled from the load-bearing structure and are particularly not needed for maintaining the structural or static integrity of the furnace. Thus, the heating units can easily be removed, e.g. for maintenance, repair or replacement, without the risk of losing the structural integrity of the furnace.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows an embodiment of a furnace according to the present invention in a sectional side view.
- Fig. 2: schematically shows a part of a wall of a furnace according to an embodiment of the present invention in a side view.

### Detailed description of the drawing

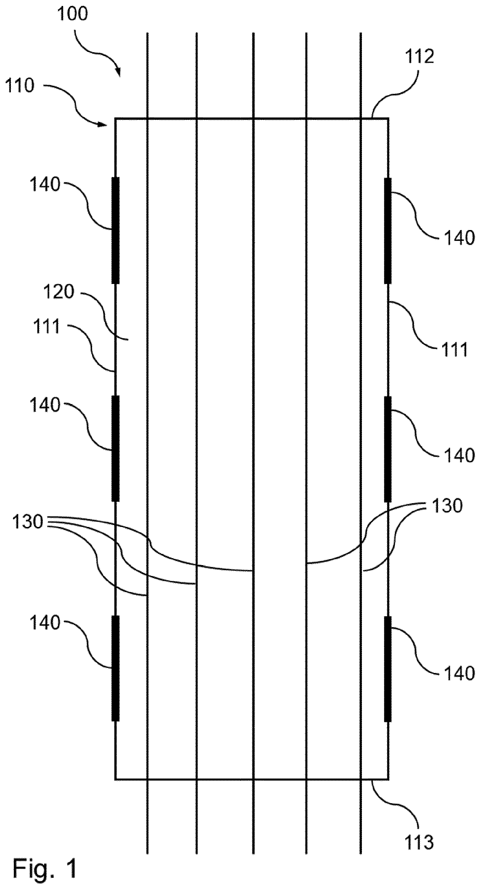

Fig. 1 shows an embodiment of a furnace 100 according to the present invention in a schematic sectional side view.

The furnace 100 or process furnace is provided for performing a chemical process, e.g. a steam cracking process, a reforming process etc. The furnace 100 can also be provided for heating a process medium. For example, the furnace 100 can be provided as a cracking furnace, a reforming furnace, a direct reduced iron (DRI) furnace etc.

The furnace 100 comprises several walls 110, which define and enclose an interior volume or process chamber 120. For example, the furnace can comprise four side walls 111, wherein only two of these side walls are shown in Fig. 1, as well as top wall 112 and a bottom wall 113.

A number of tubes or reaction tubes 130 are provided in the process chamber 120. One or more reactants can be passed through these tubes 130, where they are catalytically or non-catalytically reacted. In order to overcome an activation energy of the corresponding chemical reaction, the tubes 130 shall be heated to a predetermined temperature. It is also possible to pass one or more process media to be heated thought the tubes 130, wherein the tubes 130 are heated to a predetermined temperature.

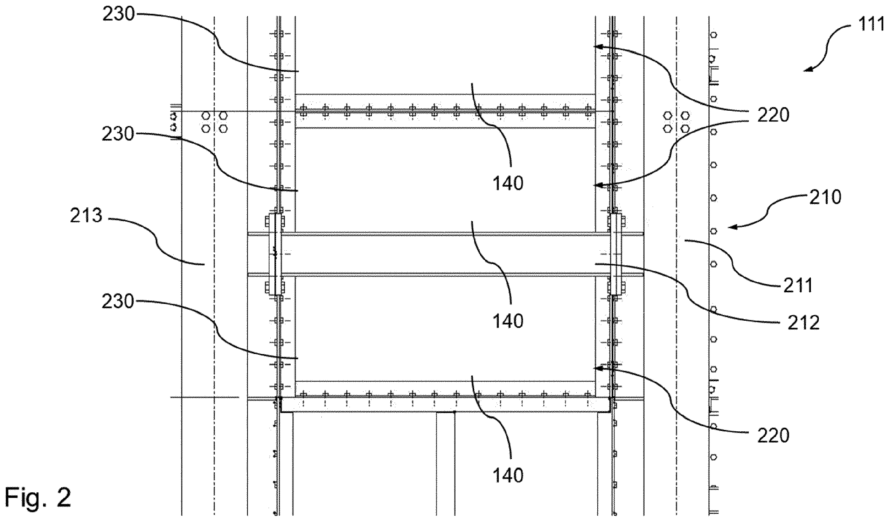

For this purpose, electrical heating units 140 are provided in one or several of the furnace walls, for example in each of the side walls 111. Each of the sidewalls 111 comprises a number of load-bearing elements as a load-bearing structure. Recess are provided in each sidewall 111 adjacent to the corresponding load-bearing elements. In each of these recesses, one electrical heating unit is inserted, as shall hereafter be explained with reference to Fig. 2.

Fig. 2 shows a part of one of the side walls 111 of the furnace 100 according to an embodiment of the present invention in a schematic side view.

As shown in Fig. 2, the load-bearing structure 210 of the wall 111 can comprises several separate load-bearing elements connected with each other, e.g. several individual beams or bars 211, 212, 213. In particular, vertically arranged beams 211, 213 can be connected to horizontally arranged beams 212 as cross connections. These beams 211, 212, 213 of the load-bearing structure 210 expediently form a load-bearing frame structure.

A number of recesses 230 is provided in the wall 111 adjacent to the load-bearing elements 211, 212, 213. For example, each recesses can be provided as a cuboid-shaped cavity or hole surrounded by respective beams of the first, load-bearing section 210.

The above reference electrical heating units 140 are provided in the recesses 230, wherein one electrical heating unit 140 is provided in each of the recesses 230. Expediently, form and dimensions of each electrical heating units 140 corresponds to and matches the form and dimensions of the respective recess 230, into which it is inserted.

Each heating unit 140 is connected to the beams of the load bearing section 210 by means of detachable fastening means like screws, bolts, etc. The electrical heating units 140 inserted into the recesses 230 and connected with load-bearing elements 211, 212, 213 are provided as a second, non-loadbearing section 220 of the wall 111. The heating units 140 serve no load-bearing purpose, are uncoupled from the load-bearing structure 210 and are not needed for maintaining the structural or static integrity of the furnace. Thus, each heating unit 140 can easily be inserted into the wall 111 as well as easily be removed from the wall 111, e.g. for maintenance, repair or replacement. Particularly, each heating unit 140 is provided as an interchangeable module which can easily be replaced by a corresponding spare part.

Each electrical heating unit 140 comprises a heating element, e.g. an electrical heating wire or a heating material like SiC or MoSi2, as actual heating means as well as an insulation element and a panel element. Further, each heating unit 140 can comprise welded-on stiffening ribs, expediently for stiffening the respective heating unit against wind loads, etc.

In Fig. 1 and Fig. 2, the side walls 111 are exemplarily shown with three cuboid recesses and three cuboid heating units. However, the specific number, position, form and dimensions of the recesses and heating units can individually be determined for each furnace wall.

According to an embodiment of the present invention, the furnace can be designed and constructed from the beginning to comprise corresponding recesses and heating units. For example, during a planning or design phase, the load-bearing elements of the corresponding wall can be predetermined as a load-bearing structure, e.g. by means of a structural analysis. In dependence of this structural analysis, the number, position, form and dimensions of the recesses and heating units can individually be determined.

During a construction phase, the walls can be created accordingly and assembled to build the furnace.

According to an embodiment of the present invention, an already existing furnace can be retrofitted to comprise corresponding recesses and heating units. A structural analysis can be performed in order to identify corresponding load-bearing elements of each wall as a load-bearing structure. Further, by means of the structural analysis, a non-loadbearing section of each wall can be identified. In dependence of this structural analysis, the number, position, form and dimensions of the recesses and heating units can individually be determined. The recesses can then be provided in the respective wall or walls, e.g. by removing material or elements, and the heating units can be inserted into the recesses.

The present invention allows to integrate electrical heating means into the walls of the furnace in a space saving, low-cost, low-effort manner. The invention further allows maintenance, repair or replacement of individual heating units in a fast, low-cost and low-effort manner, which can be carried out under high safety conditions.

## Claims

1. A furnace (100) for performing a chemical process and/or for heating a process medium, wherein the furnace (100) comprises a number of walls (110, 111, 112, 113) defining an interior volume (120) of the furnace (100),
wherein at least one load-bearing element (211, 212, 213) of at least one wall (111) of the furnace (100) is provided as a load-bearing structure (210) of the furnace (100);
wherein at least one recess (230) is provided in the at least one wall (111) adjacent to the at least one load-bearing element (211, 212, 213) of the load-bearing structure (210);
wherein at least one electrical heating unit (140) is provided in the at least one recess (230).

2. The furnace according to claim 1, wherein the at least one electrical heating unit (140) is provided as an interchangeable unit.

3. The furnace according to claim 1 or 2, wherein the at least one electrical heating unit (140) is fastened by means of detachable fastening means.

4. The furnace according to any one of the preceding claims to claims, wherein each electrical heating unit (140) comprises a heating element and/or an insulation element and/or a panel element.

5. The furnace according to any one of the preceding claims, wherein each recess (230) of the at least one recess is provided at a specific position and/or with a specific form and/or with specific dimensions.

6. The furnace according to any one of the preceding claims, wherein the several load-bearing elements (211, 212, 213) of the load-bearing structure (110) are provided and are connected with each other.

7. The furnace according to any one of the preceding claims, wherein the at least one load-bearing element comprises a first number of load-bearing elements (212) arranged horizontally or at least essentially horizontally and a second number of load-bearing elements (211, 213) arranged vertically or at least essentially vertically.

8. The furnace according to any one of the preceding claims, wherein the at least one load-bearing element (211, 212, 213) of the load-bearing structure (210) forms a frame structure.

9. The furnace according to any one of the preceding claims, wherein each recess of the at least one recess (230) is surrounded by several load-bearing elements (211, 212, 213) of the at least one load-bearing element.

10. The furnace according to any one of the preceding claims, wherein the at least one electrical heating unit (140) is provided as a non-loadbearing structure of the at least one wall (111) of the furnace (100).

11. A method for constructing a furnace (100) for performing a chemical process and/or for heating a process medium, comprising the steps of
providing a number of walls (110, 111, 112, 113) defining an interior (120) of the furnace (100);
providing at least one load-bearing element (211, 212, 213) of at least one wall (111) of the furnace (100) as a load-bearing structure of the furnace (100);
providing at least one recess (230) in the at least one wall (111) adjacent to the at least one load-bearing element (211, 212, 213) of the load-bearing structure (210);
providing at least one electrical heating unit (140) in the at least one recess (230).

12. A method for retrofitting a furnace (100) for performing a chemical process and/or for heating a process medium, wherein the furnace (100) comprises a number of walls (110, 111, 112, 113) defining an interior (120) of the furnace (100), the method comprising the steps of:
determining at least one load-bearing element (211, 212, 213) of at least one wall (111) of the furnace (100) as a load-bearing structure of the furnace (100);
providing at least one recess (230) in the at least one wall (111) adjacent to the at least one load-bearing element (211, 212, 213) of the load-bearing structure (210);
providing at least one electrical heating unit (140) in the at least one recess (230).

13. The method according claim 11 or 12, further comprising:
performing a structural analysis in order to determine a position and/or a form and/or dimensions of the at least one load-bearing element (211, 212, 213).

14. The method according to any one of the claims 11 to 13, further comprising:
performing a structural analysis in order to determine a specific number of the at least one recess (230) and/or a specific position of each recess (231, 232, 233) of the at least one recess (230) and/or a specific form of each recess (231, 232, 233) of the at least one recess (230) and/or specific dimensions of each recess (231, 232, 233) of the at least one recess (230).
